# EUROPEAN PATENT SPECIFICATION

(11) **EP 2 127 450 B1**
(45) Date of publication and mention of the grant of the patent: **07.02.2018**
(21) Application number: 07841962.9
(22) Date of filing: 06.09.2007
(51) Int. Cl.: H04W 52/02, H04W 72/04

(54) **NETWORK CONTROL OF UPLINK TRANSMIT TIMING FOR COMPRESSED MODE**
NETZWERKSTEUERUNG DES AUFWÄRTSSTRECKEN-SENDETIMINGS FÜR DEN KOMPRIMIERTEN MODUS
COMMANDE DE RÉSEAU DE SYNCHRONISATION DE TRANSMISSION DE LIAISON MONTANTE POUR MODE COMPRESSÉ

(30) Priority: 21.12.2006 US 614488; 22.12.2006 US 615326; 31.01.2007 US 669542
(43) Date of publication of application: 02.12.2009
(73) Proprietor: Sony Mobile Communications Inc., Shinagawa-ku Tokyo 140-0002 (JP)
(72) Inventor: CAMP, William, Chapel Hill, North Carolina 27514 (US); ROGERS, Terrence Edward, Chapel Hill, NC 27517 (US); FINDIKLI, Nadi Sakir, Cary, North Carolina 27511 (US)
(74) Representative: Banzer, Hans-Jörg
(86) International application number: PCT/US2007/077732
(87) International publication number: WO 2008/076485

(56) References cited:
- WO-A-00/38349
- FR-A- 2 858 903
- GB-A- 2 359 700
- JOS OUTES CARNERO: "Uplink Capacity Enhancement in WCDMA" INTERNET CITATION, [Online] 31 March 2004 (2004-03-31), XP002305759 Retrieved from the Internet: URL:http://Kom.aau.dk/ADM/research/reports /Review%20Carnero.pdf> [retrieved on 2004-11-16]

## Description

### BACKGROUND

The present invention relates generally to compressed mode operation in a mobile communication system, and more particularly, to methods of controlling timing of uplink transmission by a plurality of mobile terminals operating in compressed mode.

A known problem with WCDMA phones is excessive power consumption that results in undesirable current drain and short battery life. When engaged in normal voice communications, a WCDMA phone transmits and receives continuously. This continuous operation is one of the primary reasons for the undesirable current drain in WCDMA phones. Another reason for current drain is the presence of a duplexer in the transmit path that increases path loss.

U. S. Patent Application Serial No. 11/614,488 describes a method of reducing power consumption in a WCDMA phone by allowing the mobile terminals to switch to a compressed mode of operation. In the compressed mode, the mobile terminals transmit intermittently with a desired duty factor rather than continuously and increase their transmit power during the "on" periods to maintain the same data rate. Problems may arise with compressed mode operation if a significant number of mobile terminals operate in a compressed mode at the same time. Because the mobile terminals normally increase their transmit power in compressed mode, they will interfere with other users if too many mobile terminals transmit at the same time in the compressed mode. Further, too many mobile terminals switching their transmitters on and off at the same time may result in undesirably large swings in the uplink load.

US 2003/0193969 A1, which serves as basis for the preamble of the independent claims, describes a communication method and apparatus. A radio resource control (RRC) layer makes assignments of radio resources to user equipments. When two mobile terminals initially send a message indicating the need, purpose and direction for a compressed mode, the RRC layer assigns the two mobile terminals to transmit in complementary patterns and with the same starting frame. When another user equipment is later added to compressed mode, it is assigned to time slots having the smallest number of user equipment devices operating in compressed mode.

GB 2 359 700 A describes a communication system having a packet scheduler responsive to means for determining a level of uplink loading.

Jos Outes Carnero: "Uplink Capacity Enhancement in WCDMA" (Ph.D. thesis, Department of Communication Technology, Institute of Electronic Systems, Aalborg University), March 2004, describes a time division based scheme in which downlink frames for user equipment devices are synchronised, and the time of arrival in the downlink is used to set the uplink frame timing.

### SUMMARY

According to embodiments, methods and devices as recited in the independent claims are provided. The dependent claims define advantageous embodiments. The present invention provides a method of controlling transmit timing of one or more mobile terminals operating in a compressed mode so as to reduce fluctuations in the uplink load. In one embodiment, a base station measures the uplink load on an uplink channel and controls the transmit timing of one or more mobile terminals on the uplink channel based on the measurements of the uplink load. The transmit timing of the mobile terminals may be controlled by sending timing control signals to the mobile terminals over a downlink control channel. In one embodiment, the transmit timing of the uplink channel is slaved to the transmit timing on a downlink channel. In this case, the uplink timing may be controlled by adjusting the downlink transmit timing.

### BRIEF DESCRIPTION OF THE DRAWINGS

Figure 1 is a schematic diagram of a communication system.
Figure 2 illustrates an exemplary compression pattern with a 20% duty cycle.
Figure 3 illustrates another exemplary compression pattern with a 20% duty cycle.
Figure 4 is a flow chart illustrating an exemplary timing control process implemented by a base station.
Figure 5 is a flow chart illustrating an exemplary timing control process implemented by a mobile terminal.
Figure 6 illustrates an exemplary base station.
Figure 7 illustrates an exemplary mobile terminal.

### DETAILED DESCRIPTION

The present invention provides a method of reducing power consumption in a radio communication system. The present invention is described herein in the context of a WCDMA radio communication system, though the techniques may be applied in other radio communication systems. Further, this application explains how the principles of the present invention can be applied to a voice channel in a WCDMA system. However, the principles described herein may also be applied to other types of information, such as audio, video, and other data.

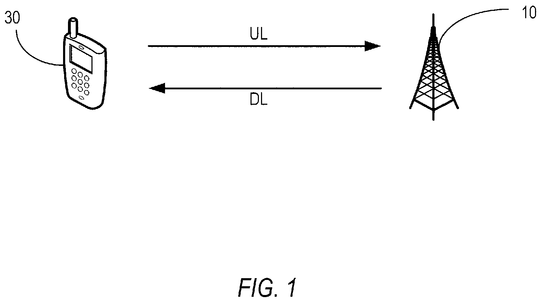

Figure 1 illustrates communications between a base station 10 and a mobile terminal 30 in a mobile communication system. The base station 10 transmits voice to the mobile terminal 30 over a downlink channel (DL). The mobile terminal 30 transmits voice to the base station 10 over an uplink channel (UL). The voice channels may be circuit-swtiched or packet-swtiched channels. For normal voice communications, the transmitter and receiver of the mobile terminal 30 are turned on continuously. The "always on" characteristic of voice communications in WCDMA systems results in excessive drain on battery power of the mobile terminal 30.

U.S Patent Application Serial No. 11/614,488 titled COMPRESSED MODE FOR REDUCING POWER CONSUMPTION filed Dec. 21, 2006 describes a method of reducing power consumption a WCDMA phone by allowing the mobile terminals 30 to switch to a compressed mode of operation. In the compressed mode, the mobile terminals 30 transmit intermittently with a desired duty factor rather than continuously, and increase their transmit power during the "on" periods to maintain the same data rate. This application is incorporated herein in its entirety by reference. To briefly summarize, the base station 10 continuously monitors the uplink load and sends control signals to one or more mobile terminals 30 to selectively enable and disable compressed mode operation depending on the uplink load. In general, compressed operation is enabled when the base station 10 has excess capacity on the uplink given the current loading conditions. If the uplink is heavily loaded, compressed mode is disabled. When the compressed mode is enabled, the mobile terminals 30 individually switch between the compressed mode (e.g. intermittent transmission) and normal mode (e.g., continuous transmission) on the uplink depending on the current transmit power level of the mobile terminal 30. When the current transmit power of the mobile terminal 30 is low and the mobile terminal 30 has sufficient power headroom, it uses compressed mode for uplink communications. Otherwise, the mobile terminal 30 transmits in normal mode on the uplink.

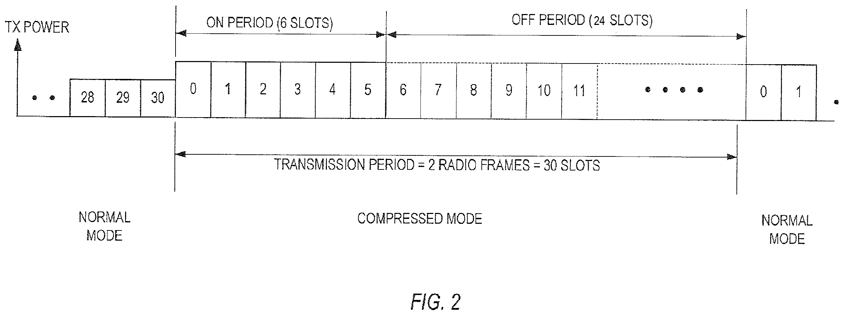

Figure 2 illustrates one implementation of compressed mode. A compression pattern is defined for a given transmission period. In one exemplary embodiment, the transmission period may be equal to two 10 millisecond radio frames. Each radio frame includes fifteen slots of .667 milliseconds duration. Thus, the transmission period comprises thirty slots or 20 milliseconds. In this example, the 20 millisecond transmission period is selected to match the vocoder time block for WCDMA. The compression pattern specifies the slots in which the transmitter is turned off. In this example, the compression pattern is represented by the bitmap 111111000000000000000000000000, where a 0 indicates an idle slot and a 1 indicates a slot during which the mobile terminal 30 transmitter is turned on. Slots coinciding with periods when the transmitter is turned off are referred to herein as "off slots" or "idle slots." Slots coinciding with periods when the transmitter is turned on are called "on slots" or "compressed mode slots." A series of consecutive slots in which the transmitter is turned on is referred to herein as an "on period." A series of consecutive slots in which the transmitter is turned off is referred to herein as an "off period" or "idle period." The duty factor equals the number of on slots divided by the total number of slots in the transmission period. Thus, a 20% duty factor means that the transmitter is turned on for six slots in a 30-slot transmission period. The on slots may be consecutive, or may be distributed over the transmission period.

Figure 2 illustrates a compression pattern with a 20% duty factor. In this exemplary pattern, the transmitter is turned on in slots 0 - 5, and is turned off in slots 6 - 29. The compression pattern is repeated in successive transmission periods as long as the mobile terminal 30 is operating in the compressed mode. The location of the on slots in the transmission period can be varied. Assuming that the on slots are consecutive, up to five compression patterns can be defined with non-overlapping off periods. When a mobile terminal 30 operates in compressed mode with a 20% duty factor, the mobile terminal 30 can select a compression pattern from any one of these six compression patterns. As noted earlier, allowing the mobile terminals 30 to select different compression patterns with the same duty factor prevents all of the mobile terminals 30 operating in the compressed mode from transmitting at the same time.

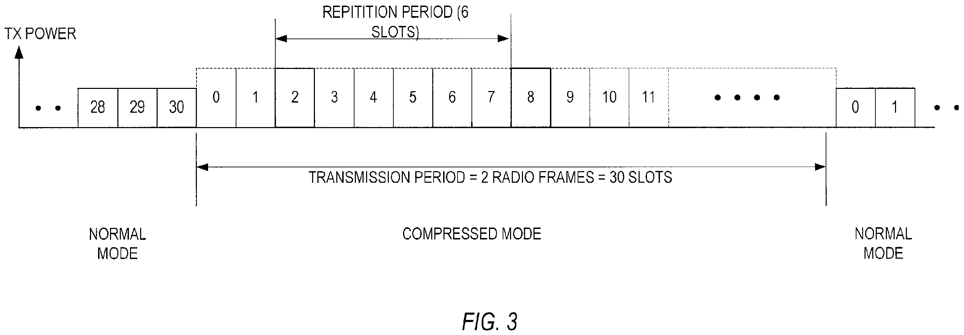

Figure 3 illustrates another exemplary compression pattern with a 20% duty factor. In this example, the mobile terminals 30 transmit in evenly spaced slots with a repetition period of six slots. In Fig. 3, the mobile terminal 30 transmits in every sixth slot beginning with slot 2 and ending with slot 32. As in the previous example, six non-overlapping compression patterns may be defined.

When the mobile terminal 30 is operating in the compressed mode, the mobile terminal 30 may increase the transmit power during on periods if necessary in order to maintain a desired data rate as shown in Figure 2. For example, if a transmit power level of 21 dBm is needed to transmit at an agreed-upon data rate in a normal mode, the mobile terminal 30 may need to increase the transmit power to 24 dBm in order to apply a 50% duty factor in compressed mode and maintain the data rate. Alternatively, the data rate could be reduced. For instance, the Adaptive Multiple Rate coding scheme could drop the codec rate from 12.2 kbps to some lower rate to offset the need to decrease the WCDMA UL Spreading Factor and accordingly, increase the mobile transmit power. Please note that this could happen independently of the downlink voice codec rate and spreading factor used for the downlink. Even though the transmit power will often have to be increased, at low transmit power levels there is little or no increase in current drain on the power amplifier to supply this higher power, and at higher power levels the higher current drain is for less time and will generally be breakeven when averaged over a time period long relative to the compressed mode pattern. In both cases, there is a substantial gain from turning OFF all the hardware for periods of time. In this case, substantial reduction in power consumption can be realized. The amount of the increase in the transmit power level may be related to the duty factor. In the example given above, the increase in the transmit power level equals the inverse of the duty factor. Thus, a 50% duty factor equates to a two-fold increase in transmit power level.

Problems may arise with compressed mode operation if a significant number of mobile terminals 30 operate in a compressed mode at the same time. Because the mobile terminals 30 normally increase their transmit power in compressed mode, they will interfere with other users if too many mobile terminals 30 transmit at the same time in the compressed mode. Moreover, if a large number of mobile terminals 30 switch their transmitters on and off at the same time, there will be pronounced swings in uplink load versus time.

According to the present invention, the base station 10 or other network node (e.g., Radio Network Controller) actively manages the transmit timing of a plurality of mobile terminals 30 operating in the compressed mode to prevent large fluctuations in uplink load over time. The general concept is to measure the uplink load multiple times over a defined transmission period to detect undesirably large fluctuations in the uplink load. If the fluctuations in the uplink load are large, the base station 10 can adjust the transmit timing of one or more mobile terminals 30 operating in the compressed mode to more evenly distribute the uplink load versus time. If the mobile terminals 30 are in soft handoff, the base stations 10 in the mobile terminal's active set may need to coordinate with one another. The method may be implemented by a base station in a mobile communication system to minimize interference in a single cell or sector of a communication network. Alternatively, the method can be implemented by a RNC to minimize interference in a group of cells or sectors in the communication network.

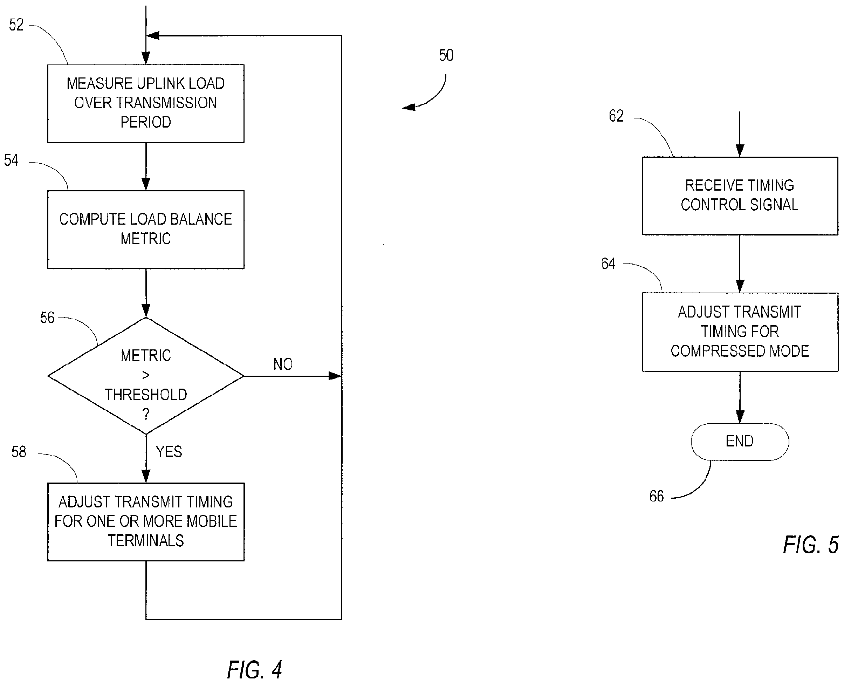

Figure 4 illustrates an exemplary method 50 implemented at a base station 10 or other network node to control transmit timing of one or more mobile terminals 30 operating in compressed mode. The base station 10 measures the uplink load multiple times during each transmission period (block 52). How the base station 10 measures the uplink load is not a material aspect of the invention. As one example, the base station 10 may use the receiver ADC output to measure the aggregate noise level over a transmission period. The time period for making measurements should be small relative to the transmission period so that multiple measurements can be made during the transmission period. In one embodiment, the base station 10 makes at least one measurement in each uplink transmit slot. Based on the load measurements, the base station 10 computes a metric representative of the load balance versus time (block 54). For example, the base station 10 may compute a load balance metric by computing the difference between the largest and smallest measurements in a transmission period. Alternatively, the base station 10 could compute the peak-to-average ratio of all of the measurements during a transmission period to obtain a load balance metric. Whatever method is used, the base station 10 compares the computed load balance metric to a defined threshold representing the maximum fluctuation that can be tolerated (block 56). If the metric exceeds the threshold, the base station 10 may take corrective measures to reduce the fluctuation in the uplink load (block 58). More particularly, the base station 10 may take corrective action by adjusting the transmit timing of one or more selected mobile terminals 30. The process 50 repeats in every transmission period.

The base station 10 selects one or more mobile terminals 30 or groups of mobile terminals 30 operating in the compressed mode to make timing adjustments. In one embodiment, the individual mobile terminals 30 or groups may be selected randomly. It may be noted that the selection process repeats in every transmission period so that random selection will eventually result in an acceptable noise level. Alternatively, the base station 10 may track the timing of all mobile terminals 30 operating in the compressed mode. If more than an average number of mobile terminals 30 have overlapping transmissions in a given time interval (e.g. one or more slots) resulting in excessive loading in that time interval, the base station 10 may select one or more of those mobile terminals 30 for timing adjustment.

Two exemplary methods are described herein for adjusting the transmit timing of the mobile terminals 30, though others can be used. According to a first method, the transmit timing for uplink transmissions by a selected mobile terminal 30 is adjusted by sending a timing control signal over a downlink control channel. A new downlink control channel may be defined for this purpose, or an existing control channel may be used. A second method requires that a compressed mode be enabled on both uplink and downlink channels. According to the second embodiment, the transmit timing of the mobile terminal 30 on the uplink channel in compressed mode is slaved to the transmit timing of the base station 10 on the downlink channel. In this case, the base station 10 can change the transmit timing on the uplink channel by changing the timing of its own transmissions on the downlink channel. It may be advantageous to interleave the transmission on the uplink and downlink respectively for a single mobile terminal 30 so that there is an opportunity to bypass the duplexer in the compressed mode to gain additional power savings.

Figure 5 illustrates a procedure implemented by a mobile terminal 30 to adjust its transit timing on an uplink channel while in the compressed mode. In this method, the mobile terminal 30 receives a timing control signal from the base station 10, which may be transmitted over a downlink control channel (block 62). In response to the timing control signal, the mobile terminal 30 adjusts its transmit timing for compressed mode operation (block 64) and the procedure ends (block 66).

The timing control signal may indicate a transmit timing for the mobile terminal 30 explicitly. For example, the base station 10 may instruct the mobile terminal 30 to begin its uplink transmission in a particular transmit slot. The specification of the transmit slot can be indicated as an offset from the beginning of the transmission period. Alternatively, the mobile terminal 30 may be configured to shift its transmit timing in compressed mode by a fixed amount each time it receives a timing control signal from the base station 10. In this case, the timing control signal may comprise a single bit. For example, the mobile terminal 30 may be configured to shift its transmit timing in compressed mode by a predetermined number of slots (e.g., 6 slots) when the timing control bit is a "1." Thus, a mobile terminal 30 that begins its uplink transmission in slot 1, would shift to slot 7 when it receives a "1" from the base station 10.

The base station 10 may implement dedicated timing control, where the base station independently controls the timing of each mobile terminal 30. In this case, the timing control signals may be time multiplexed on a common control channel. The downlink control channel can be divided into frames, which may be further divided into a plurality of control slots Each mobile terminal 30 may be assigned to a specific control slot in the common downlink control channel to receive timing control signals. Alternatively, the base station 10 may implement common timing control wherein a single timing control signal is transmitted to all of the mobile terminals 30 over a common control channel, or to a specific group of mobile terminals 30.

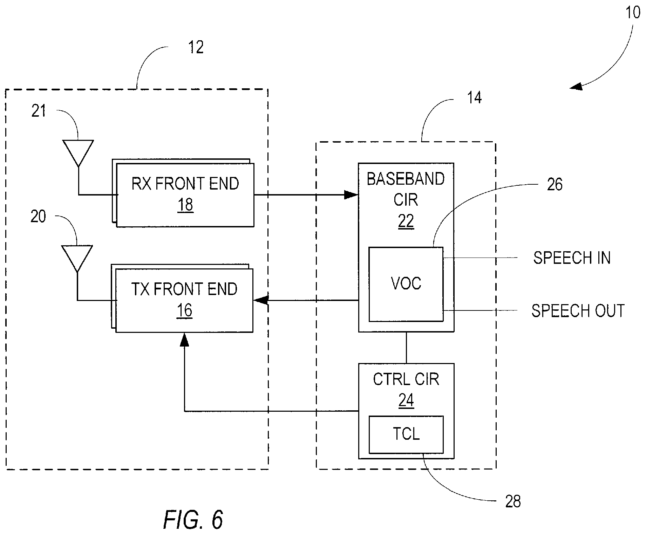

Figure 6 illustrates an exemplary base station 10 according to one embodiment. The base station 10 comprises a radio frequency section 12 and a digital section 14. The radio frequency section 12 comprises a transmit circuit 16, a receiver circuit 18, and a transmit antenna 20 and a receive antenna 21. While only one transmit circuit 16 and receive circuit 18 is shown, those skilled in the art will appreciate that a base station 10 will typically include an array of transmit and receive circuits 16, 18 that it can allocate to different mobile terminals 30. The transmit circuit 16 upconverts, filters, and amplifies signals output by the digital section 14 for transmission via antenna 20. A D-to-A converter (not shown) converts signals output to the transmit circuit 16. Receive circuit 18 downconverts the receive signals to baseband frequency, and then filters and amplifies the received signal. An A-to-D converter (not shown) converts the receive signal to digital form for processing in digital section 14.

The digital section 14 comprises baseband circuit 22 and a control circuit 24. The baseband circuit 22 and control circuit 24 may comprise one or more processors or processing circuits. The baseband circuit 22 processes signals transmitted and received by the base station 10. The baseband circuit 22 encodes, modulates, and spreads the transmitted signals. On the receiver side, the baseband circuit 22 despreads, demodulates, and decodes received signals. The baseband circuit 22 also implements a vocoder 26 for encoding and decoding speech signals.

The control circuit 24 controls the overall operation of the base station 10. The control circuit 24 includes timing control logic (TCL) logic 28 for controlling the transmit timing of the mobile terminals 30 as described herein. The TCL 28 may, for example, implement the exemplary process shown in Figure 4.

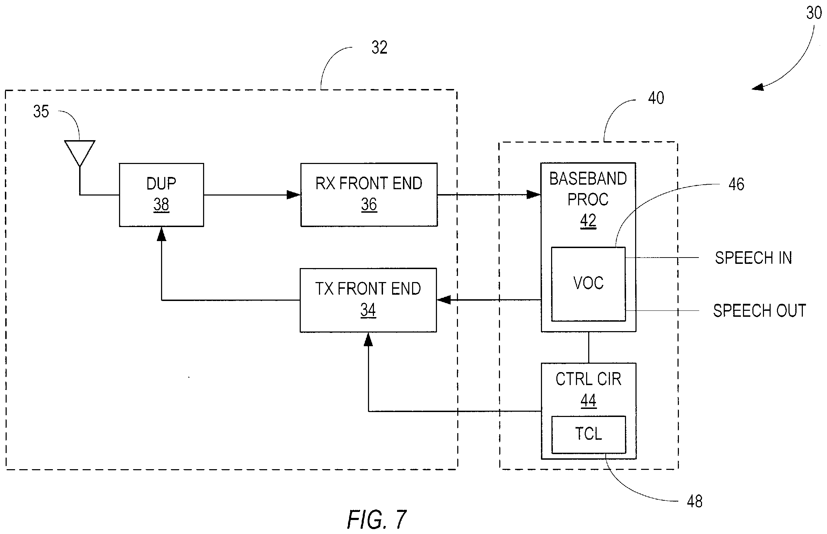

Figure 7 illustrates an exemplary mobile terminal 30 according to one exemplary embodiment. The mobile terminal 30 comprises a radio frequency section 32 and a digital section 40. The radio frequency section 32 comprises a transmitter front end circuit 34, a receiver front end circuit 36, a duplexer 38, and a shared antenna 35. The transmitter front end circuit 34 upconverts, filters, and amplifies signals output by the digital section 40 for transmission via antenna 35. A D-to-A converter (not shown) converts signals output to the transmitter front end 34. Receiver front end circuit 36 downconverts the received signals to baseband frequency, and then filters and amplifies the received signals. An A-to-D converter (not shown) converts the received signals to digital form for processing in digital section 40. Duplexer 38, couples both the transmitter front end 34 and receiver front end 36 to the shared antenna 35.

The digital section 40 comprises a baseband processor 42 and control circuit 44. The baseband processor 42 and control circuit 44 may comprise one or more processors or processing circuits. The baseband processor 42 processes signals transmitted and received by the mobile terminal 30. For example, the baseband processor 42 encodes, modulates, and spreads transmitted signals. On the receiver side, the baseband processor 42 despreads, demodulates, and decodes the received signal. The baseband processor 42 also implements a vocoder 46 for encoding and decoding speech signals.

The control circuit 44 controls the overall operation of the mobile terminal 30. The control circuit 44 includes timing control logic 48 for adjusting uplink transmit timing in the compressed mode as herein described. When operating in compressed mode, the timing control logic (TCL) 48 is responsible for adjusting the uplink transmit timing responsive to timing control signals form the base station 10, as shown in Figure 5.

While the present invention describes a method of reducing interference among mobile terminals 30 operating in a compressed mode, the same interference reduction techniques described can be applied in other situations where the mobile terminals 30 transmit repetitively in short bursts. Any intermittent transmission mode having a recurring pattern of ON bursts and OFF periods with the same periodicity occurring in multiple mobile terminals 30 will have the same problem of potentially overlapping ON periods causing increased interference in the base station receiver and can use the same techniques to reduce that interference. One such occurrence might be the transmission of low data rate services such as voice in short data bursts that occur at a fixed rate or a small number of fixed rates. The techniques may also be applied in OFDM systems.

The present invention provides a method and apparatus for controlling the transmit timing of a plurality of mobile terminals operating in a compressed mode so that undesirably large fluctuations in the uplink load can be reduced or minimized. The present invention may, of course, be carried out in other specific ways than those herein set forth without departing from the scope and essential characteristics of the invention. The present embodiments are, therefore, to be considered in all respects as illustrative and not restrictive, and all changes coming within the meaning and equivalency range of the appended claims are intended to be embraced therein.

## Claims

1. A method of controlling transmit timing for one or more mobile terminals (30) operating in an intermittent transmission mode, said method comprising:
measuring (52) uplink load at a base station (10);
**characterized by** the further method steps performed by the base station of: computing (54) a load balance metric indicative of fluctuations in the uplink load based on the measurements;
comparing (56) the computed load balance metric to a predetermined threshold representing a maximum tolerable fluctuation for the uplink; and
selectively adjusting (58) the transmit timing for one or more mobile terminals (30) if the computed load balance metric meets or exceeds the predetermined threshold.

2. The method of claim 1 wherein controlling the transmit timing for one or more mobile terminals (30) based on said load balance metric comprises transmitting a timing control signal to one or more mobile terminals (30) over a downlink control channel.

3. The method of claim 2 wherein transmitting a timing control signal to one or more mobile terminals (30) over a downlink control channel comprises transmitting a dedicated timing control signal to each mobile terminal (30).

4. The method of claim 2 wherein transmitting a timing control signal to one or more mobile terminals (30) comprises transmitting a common control signal to a plurality of mobile terminals (30).

5. The method of claim 1 wherein controlling the transmit timing for one or more mobile terminals (30) based on said load balance metric comprises:
slaving the transmit timing of the mobile terminals (30) on the uplink channel to the transmit timing on a downlink channel; and
adjusting the transmit timing on the downlink channel to control the transmit timing of the mobile terminals (30).

6. A base station (10) comprising:
a transceiver (12, 16) for communicating with a plurality of mobile terminals (30) over an uplink channel; and
a control circuit (24),
**characterized in that** the control circuit (24) is configured to:
compute (54) a load balance metric indicative of fluctuations in the uplink load based on uplink load measurements;
compare (56) the computed load balance metric to a predetermined threshold representing a maximum tolerable fluctuation for the uplink; and
selectively adjust (58) the transmit timing for one or more mobile terminals (30) if the computed load balance metric meets or exceeds the predetermined threshold.

7. The base station (10) of claim 6 wherein the control circuit (24) is configured to transmit a timing control signal to one or more mobile terminals (30) over a downlink control channel to control the transmit timing of the mobile terminals (30).

8. The base station (10) of claim 7 wherein the control circuit (24) is configured to transmit a dedicated timing control signal to each mobile terminal (30).

9. The base station (10) of claim 7 wherein the control circuit (24) is configured to transmit a common control signal to a plurality of mobile terminals (30).

10. The base station (10) of claim 6 wherein the transmit timing of the mobile terminals (30) on the uplink channel is slaved to the transmit timing on a downlink channel; and wherein the control circuit (24) is configured to adjust the transmit timing on the downlink channel to control the transmit timing of the mobile terminals (30).

11. A method of controlling transmit timing of a mobile terminal (30) operating in an intermittent transmission mode on an uplink channel, said method comprising the following steps performed by the mobile terminal of:
transmitting intermittently on an uplink channel during a transmission period when operating in an intermittent transmission mode, wherein the transmission period comprises a plurality of time slots;
receiving (62) a timing control signal from a base station (10); and adjusting (64) the time slots in a transmission period used for the intermittent transmissions responsive to said timing control signal,
**characterized in that**
the timing control signal is received responsive to fluctuations in an uplink load exceeding a threshold; and
the adjustment of the time slots used for the intermittent transmissions is made to reduce the fluctuations in the uplink load according to the received timing control signal.

12. A mobile terminal (30) comprising:
a transceiver (32, 34) for transmitting intermittently on an uplink channel during a transmission period when operating in an intermittent transmission mode, wherein the transmission period comprises a plurality of time slots; and for receiving (62) a timing control signal from a base station (10); and a control circuit (44) configured to adjust (64) the time slots in a transmission period used for the intermittent transmissions responsive to the timing control signal from the base station (10),
**characterized in that**
the transceiver (32, 34) is configured to receive the timing control signal responsive to fluctuations in an uplink load exceeding a threshold; and
the control circuit (44) is configured to adjust the time slots used for the intermittent transmissions to reduce the fluctuations in the uplink load according to the received timing control signal.

13. A method of controlling transmit timing of a mobile terminal (30) operating in a compressed mode on an uplink channel, said method comprising the following steps performed by the mobile terminal of:
transmitting intermittently on an uplink channel during a transmission period when operating in an intermittent transmission mode, wherein the transmission period comprises a plurality of time slots; and
adjusting the time slots in a transmission period used for the intermittent transmissions responsive to changes in the timing of transmissions on a downlink channel,
**characterized in that**
the changes in the timing of transmissions on a downlink channel occur responsive to fluctuations in an uplink load exceeding a threshold; and
the adjustment of the time slots used for the intermittent transmissions is made to reduce the fluctuations in the uplink load.

14. A mobile terminal (30) comprising:
a transceiver (32, 34) for transmitting intermittently on an uplink channel during a transmission period when operating in an intermittent transmission mode, wherein the transmission period comprises a plurality of time slots; and
a control circuit (44) configured to adjust the time slots in a transmission period used for the intermittent transmissions responsive to changes in the timing of transmissions on a downlink channel,
**characterized in that**
the control circuit (44) is configured to detect the changes in the timing of transmissions on a downlink channel responsive to fluctuations in an uplink load exceeding a threshold; and
the control circuit (44) is configured to adjust the time slots used for the intermittent transmissions to reduce the fluctuations in the uplink load.

## Patentansprüche

1. Verfahren zur Steuerung des Sendetimings für ein oder mehrere mobile Endgeräte (30), welche in einem intermittierenden Sendemodus arbeiten, wobei das Verfahren umfasst:
Messen (52) der Uplink-Last an einer Basisstation (10);
**gekennzeichnet durch** die weiteren Verfahrensschritte, welche von der Basisstation durchgeführt werden:
Berechnen (54) einer Lastausgleichsmetrik, welche Fluktuationen in der Uplink-Last anzeigt, basierend auf den Messungen;
Vergleichen (56) der berechneten Lastausgleichsmetrik mit einem vorbestimmten Schwellenwert, welcher eine maximal tolerierbare Schwankung für den Uplink darstellt; und
selektives Einstellen (58) des Sendetimings für eines oder mehrere mobile Endgeräte (30), wenn die berechnete Lastausgleichsmetrik den vorbestimmten Schwellenwert erreicht oder überschreitet.

2. Verfahren nach Anspruch 1, bei dem das Steuern des Sendetimings für ein oder mehrere mobile Endgeräte (30) basierend auf der Lastausgleichsmetrik ein Übertragen eines Zeitsteuerungssignals an ein oder mehrere mobile Endgeräte (30) über einen Downlink-Steuerungskanal umfasst.

3. Verfahren nach Anspruch 2, bei dem das Übertragen eines Zeitsteuerungssignals an ein oder mehrere mobile Endgeräte (30) über einen Downlink-Steuerkanal ein Übertragen eines dedizierten Zeitsteuerungssignals an jedes mobile Endgerät (30) umfasst.

4. Verfahren nach Anspruch 2, bei dem das Übertragen eines Zeitsteuerungssignals an ein oder mehrere mobile Endgeräte (30) über einen Downlink-Steuerkanal ein Übertragen eines gemeinsamen Steuersignals an eine Mehrzahl von mobilen Endgeräten (30) umfasst.

5. Verfahren nach Anspruch 1, bei dem das Steuern des Sendetimings für ein oder mehrere mobile Endgeräte (30) basierend auf der Lastausgleichsmetrik umfasst:
Koppeln als Slave des Sendetimings der mobilen Endgeräte (30) auf dem Uplink-Kanal mit dem Sendetiming auf einem Downlink-Kanal; und
Einstellen des Sendetimings auf dem Downlink-Kanal, um die Sendetimings der mobilen Endgeräte (30) zu steuern.

6. Basisstation (10), umfassend:
einen Transceiver (12, 16) zur Kommunikation mit einer Vielzahl von mobilen Endgeräten (30) über einen Uplink-Kanal; und
eine Steuerschaltung (24), **dadurch gekennzeichnet, dass** die Steuerschaltung (24) konfiguriert ist zum:
Berechnen (54) einer Lastausgleichsmetrik, welche Schwankungen in der Uplink-Last anzeigt, basierend auf Uplink-Lastmessungen;
Vergleichen (56) der berechneten Lastausgleichsmetrik mit einem vorgegebenen Schwellenwert, welcher eine maximal tolerierbare Fluktuation für den Uplink darstellt; und
selektives Einstellen (58) des Sendetimings für eines von mehreren mobilen Endgeräten (30), wenn die berechnete Lastausgleichsmetrik den vorbestimmten Schwellenwert erreicht oder überschreitet.

7. Basisstation (10) nach Anspruch 6, wobei die Steuerschaltung (24) derart konfiguriert ist, dass sie ein Zeitsteuerungssignal an ein oder mehrere mobile Endgeräte (30) über einen Downlink-Steuerkanal sendet, um das Sendetiming der mobilen Endgeräte (30) zu steuern.

8. Basisstation (10) nach Anspruch 7, wobei die Steuerschaltung (24) derart konfiguriert ist, dass sie ein dediziertes Zeitsteuerungssignal an jedes mobile Endgerät (30) sendet.

9. Basisstation (10) nach Anspruch 7, wobei die Steuerschaltung (24) derart konfiguriert ist, dass sie ein gemeinsames Steuersignal an eine Vielzahl von mobilen Endgeräten (30) sendet.

10. Die Basisstation (10) nach Anspruch 6, wobei das Sendetiming der mobilen Endgeräte (30) auf dem Uplink-Kanal als Slave mit dem Sendetiming auf einem Downlink-Kanal gekoppelt ist; und wobei die Steuerschaltung (24) derart konfiguriert ist, dass sie das Sendetiming auf dem Downlink-Kanal anpasst, um das Sendetiming der mobilen Endgeräte (30) zu steuern.

11. Verfahren zur Steuerung des Sendetimings eines mobilen Endgerätes (30), welches in einem intermittierenden Sendemodus auf einem Uplink-Kanal arbeitet, wobei das Verfahren die folgenden Schritte umfasst, welche von dem mobilen Endgerät ausgeführt werden:
intermittierendes Senden auf einem Uplink-Kanal während eines Sendezeitraums, während es in einem intermittierenden Sendemodus betrieben wird, wobei der Sendezeitraum eine Vielzahl von Zeitfenster umfasst;
Empfangen (62) eines Zeitsteuerungssignals von einer Basisstation (10); und
Einstellen (64) der Zeitfenster in einem Sendezeitraum, welcher für die intermittierenden Sendungen verwendet wird, in Antwort auf das Zeitsteuerungssignal,
**dadurch gekennzeichnet, dass** das Zeitsteuerungssignal in Reaktion darauf empfangen wird, dass Schwankungen in einer Uplink-Last einen Schwellenwert überschreiten; und
die Anpassung der Zeitfenster, welche für die intermittierenden Sendungen verwendet werden, erfolgt, um die Schwankungen in der Uplink-Last entsprechend dem empfangenen Zeitsteuerungssignal zu reduzieren.

12. Mobiles Endgerät (30), umfassend:
einen Transceiver (32, 34) zum intermittierenden Senden auf einem Uplink-Kanal während eines Sendezeitraums, wenn er in einem intermittierenden Sendemodus arbeitet, wobei der Sendezeitraum eine Vielzahl von Zeitfenster umfasst; und zum Empfangen (62) eines Zeitsteuerungssignals von einer Basisstation (10); und
eine Steuerschaltung (44), welche zum Einstellen (64) der Zeitfenster in einem Sendezeitraum, welche für die intermittierenden Sendungen verwendet werden, in Antwort auf das Zeitsteuerungssignal von der Basisstation (10) konfiguriert ist,
**dadurch gekennzeichnet, dass** der Transceiver (32, 34) derart konfiguriert ist, dass er das Zeitsteuerungssignal in Antwort darauf, dass Schwankungen in einer Uplink-Last einen Schwellenwert überschreiten, empfängt; und
die Steuerschaltung (44) derart konfiguriert ist, dass sie die Zeitfenster, welche für die intermittierenden Senden verwendet werden, so einstellt, dass die Schwankungen in der Uplink-Last entsprechend dem empfangenen Zeitsteuerungssignal reduziert werden.

13. Verfahren zur Steuerung des Sendetimings eines mobilen Endgerätes (30), welches in einem komprimierten Modus auf einem Uplink-Kanal arbeitet, wobei das Verfahren die folgenden Schritte umfasst, welche durch das mobile Endgerät ausgeführt werden:
intermittierendes Senden auf einem Uplink-Kanal während eines Sendezeitraums, während es in einem intermittierenden Sendemodus betrieben wird, wobei der Sendezeitraum eine Vielzahl von Zeitfenster umfasst;
Empfangen (62) eines Zeitsteuerungssignals von einer Basisstation (10); und
Einstellen (64) der Zeitfenster in einem Sendezeitraum, welche für die intermittierenden Sendungen verwendet werden, in Antwort auf das Zeitsteuerungssignal,
**dadurch gekennzeichnet, dass** das Zeitsteuerungssignal in Reaktion darauf empfangen wird, dass Schwankungen in einer Uplink-Last einen Schwellenwert überschreiten; und
die Anpassung der Zeitfenster, welche für die intermittierenden Sendungen verwendet werden, erfolgt, um die Schwankungen in der Uplink-Last entsprechend dem empfangenen Zeitsteuerungssignal zu reduzieren.

14. Mobiles Endgerät (30), umfassend:
einen Transceiver (32, 34) zum intermittierenden Senden auf einem Uplink-Kanal während eines Sendezeitraums, während er in einem intermittierenden Sendemodus betrieben wird, wobei der Sendezeitraum eine Vielzahl von Zeitfenster umfasst; und
eine Steuerschaltung (44), welche zum Einstellen (64) der Zeitfenster in einem Sendezeitraum, welcher für die intermittierenden Sendungen verwendet wird, in Antwort auf das Zeitsteuerungssignal von der Basisstation (10) konfiguriert ist,
**dadurch gekennzeichnet, dass** die Steuerschaltung (44) derart konfiguriert ist, dass sie die Änderungen im Sendetiming auf einem Downlink-Kanal in Antwort darauf erfasst, dass Schwankungen in einer Uplink-Last einen Schwellenwert überschreiten; und
die Steuerschaltung (44) derart konfiguriert ist, dass sie die für die intermittierenden Sendungen verwendeten Zeitfenster anpasst, um die Schwankungen in der Uplink-Last zu reduzieren.

## Revendications

1. Procédé de commande de synchronisation de transmission pour un ou plusieurs terminaux mobiles (30) fonctionnant dans un mode de transmission intermittente, ledit procédé consistant à :
mesurer (52) une charge de liaison montante au niveau d'une station de base (10) ;
**caractérisé en ce que** :
les autres étapes de procédé effectuées par la station de base consistent :
à calculer (54) une métrique d'équilibrage de charge indiquant des fluctuations de la charge de liaison montante sur la base des mesures ;
à comparer (56) la métrique d'équilibrage de charge calculée à un seuil prédéterminé représentant une fluctuation maximale tolérable pour la liaison montante ; et
à ajuster (58) de manière sélective la synchronisation de transmission pour un ou plusieurs terminaux mobiles (30) si la métrique d'équilibrage de charge calculée satisfait ou dépasse le seuil prédéterminé.

2. Procédé de la revendication 1, dans lequel la commande de la synchronisation de transmission pour un ou plusieurs terminaux mobiles (30) sur la base de ladite métrique d'équilibrage de charge consiste à transmettre un signal de commande de synchronisation à un ou plusieurs terminaux mobiles (30) sur un canal de commande de liaison descendante.

3. Procédé de la revendication 2, dans lequel la transmission d'un signal de commande de synchronisation à un ou plusieurs terminaux mobiles (30) sur un canal de commande de liaison descendante consiste à transmettre un signal de commande de synchronisation dédié à chaque terminal mobile (30).

4. Procédé de la revendication 2, dans lequel la transmission d'un signal de commande de synchronisation à un ou plusieurs terminaux mobiles (30) consiste à transmettre un signal de commande commun à une pluralité de terminaux mobiles (30).

5. Procédé de la revendication 1, dans lequel la commande de la synchronisation de transmission pour un ou plusieurs terminaux mobiles (30) sur la base de ladite métrique d'équilibrage de charge consiste à :
asservir la synchronisation de transmission des terminaux mobiles (30) sur le canal de liaison montante à la synchronisation de transmission sur un canal de liaison descendante ; et
ajuster la synchronisation de transmission sur le canal de liaison descendante pour commander la synchronisation de transmission des terminaux mobiles (30).

6. Station de base (10) comprenant :
un émetteur-récepteur (12, 16) pour communiquer avec une pluralité de terminaux mobiles (30) sur un canal de liaison montante ; et
un circuit de commande (24),
**caractérisée en ce que** le circuit de commande (24) est configuré pour :
calculer (54) une métrique d'équilibrage de charge indiquant des fluctuations de la charge de liaison montante sur la base des mesures de charge de liaison montante ;
comparer (56) la métrique d'équilibrage de charge calculée à un seuil prédéterminé représentant une fluctuation maximale tolérable pour la liaison montante ; et
ajuster (58) de manière sélective la synchronisation de transmission pour un ou plusieurs terminaux mobiles (30) si la métrique d'équilibrage de charge calculée satisfait ou dépasse le seuil prédéterminé.

7. Station de base (10) de la revendication 6, dans laquelle le circuit de commande (24) est configuré pour transmettre un signal de commande de synchronisation à un ou plusieurs terminaux mobiles (30) sur un canal de commande de liaison descendante pour commander la synchronisation de transmission des terminaux mobiles (30).

8. Station de base (10) de la revendication 7, dans laquelle le circuit de commande (24) est configuré pour transmettre un signal de commande de synchronisation dédié à chaque terminal mobile (30).

9. Station de base (10) de la revendication 7, dans laquelle le circuit de commande (24) est configuré pour transmettre un signal de commande commun à une pluralité de terminaux mobiles (30).

10. Station de base (10) de la revendication 6, dans laquelle la synchronisation de transmission des terminaux mobiles (30) sur le canal de liaison montante est asservie à la synchronisation de transmission sur un canal de liaison descendante ; et dans laquelle le circuit de commande (24) est configuré pour ajuster la synchronisation de transmission sur le canal de liaison descendante afin de commander la synchronisation de transmission des terminaux mobiles (30).

11. Procédé de commande de synchronisation de transmission d'un terminal mobile (30) fonctionnant dans un mode de transmission intermittente sur un canal de liaison montante, ledit procédé comprenant les étapes suivantes effectuées par le terminal mobile consistant à :
effectuer de manière intermittente une transmission sur un canal de liaison montante pendant une période de transmission lors du fonctionnant dans un mode de transmission intermittente, la période de transmission comprenant une pluralité d'intervalles de temps ;
recevoir (62) un signal de commande de synchronisation à partir d'une station de base (10) ; et
ajuster (64) les intervalles de temps dans une période de transmission utilisée pour les transmissions intermittentes en réponse audit signal de commande de synchronisation,
**caractérisé en ce que** :
le signal de commande de synchronisation est reçu en réponse aux fluctuations d'une charge de liaison montante dépassant un seuil ; et
l'ajustement des intervalles de temps utilisés pour les transmissions intermittentes est effectué pour réduire les fluctuations de la charge de liaison montante en fonction du signal de commande de synchronisation reçu.

12. Terminal mobile (30) comprenant :
un émetteur-récepteur (32, 34) pour effectuer de manière intermittente une transmission sur un canal de liaison montante pendant une période de transmission lors d'un fonctionnement dans un mode de transmission intermittente, la période de transmission comprenant une pluralité d'intervalles de temps ; et pour recevoir (62) un signal de commande de synchronisation à partir d'une station de base (10) ; et
un circuit de commande (44) configuré pour ajuster (64) les intervalles de temps dans une période de transmission utilisée pour les transmissions intermittentes en réponse au signal de commande de synchronisation provenant de la station de base (10),
**caractérisé en ce que** :
l'émetteur-récepteur (32, 34) est configuré pour recevoir le signal de commande de synchronisation en réponse aux fluctuations d'une charge de liaison montante dépassant un seuil ; et
le circuit de commande (44) est configuré pour ajuster les intervalles de temps utilisés pour les transmissions intermittentes afin de réduire les fluctuations de la charge de liaison montante en fonction du signal de commande de synchronisation reçu.

13. Procédé de commande de synchronisation de transmission d'un terminal mobile (30) fonctionnant dans un mode compressé sur un canal de liaison montante, ledit procédé comprenant les étapes suivantes effectuées par le terminal mobile consistant à :
effectuer de manière intermittente une transmission sur un canal de liaison montante pendant une période de transmission lors d'un fonctionnement dans un mode de transmission intermittente, la période de transmission comprenant une pluralité d'intervalles de temps ; et
ajuster les intervalles de temps dans une période de transmission utilisée pour les transmissions intermittentes en réponse aux changements de la synchronisation de transmissions sur un canal de liaison descendante,
**caractérisé en ce que** :
les changements de la synchronisation de transmissions sur un canal de liaison descendante se produisent en réponse à des fluctuations d'une charge de liaison montante dépassant un seuil ; et
l'ajustement des intervalles de temps utilisés pour les transmissions intermittentes est effectué pour réduire les fluctuations de la charge de liaison montante.

14. Terminal mobile (30) comprenant :
un émetteur-récepteur (32, 34) pour effectuer de manière intermittente une transmission sur un canal de liaison montante pendant une période de transmission lors d'un fonctionnement dans un mode de transmission intermittente, la période de transmission comprenant une pluralité d'intervalles de temps ; et
un circuit de commande (44) configuré pour ajuster les intervalles de temps dans une période de transmission utilisée pour les transmissions intermittentes en réponse aux changements de la synchronisation de transmissions sur un canal de liaison descendante,
**caractérisé en ce que** :
le circuit de commande (44) est configuré pour détecter les changements de la synchronisation de transmissions sur un canal de liaison descendante en réponse aux fluctuations d'une charge de liaison montante dépassant un seuil ; et
le circuit de commande (44) est configuré pour ajuster les intervalles de temps utilisés pour les transmissions intermittentes afin de réduire les fluctuations de la charge de liaison montante.
